(19) Europäisches Patentamt
European Patent Office
Office européen des brevets

(11) **EP 4 535 624 A1**

(12) **EUROPEAN PATENT APPLICATION**
published in accordance with Art. 153(4) EPC

(43) Date of publication:
**09.04.2025 Bulletin 2025/15**

(21) Application number: **23815886.9**

(22) Date of filing: **23.05.2023**

(51) International Patent Classification (IPC):
***H02K 5/04*** (2006.01)

(52) Cooperative Patent Classification (CPC):
**H02K 5/04**

(86) International application number:
**PCT/JP2023/019211**

(87) International publication number:
**WO 2023/234127 (07.12.2023 Gazette 2023/49)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **31.05.2022 JP 2022089251**

(71) Applicant: **Panasonic Intellectual Property
Management Co., Ltd.
Kadoma-shi, Osaka 571-0057 (JP)**

(72) Inventors:
• **SHIMOKAWA, Tomoya
Kadoma-shi, Osaka 571-0057 (JP)**
• **ASO, Noritaka
Kadoma-shi, Osaka 571-0057 (JP)**
• **MORIOKA, Masayuki
Kadoma-shi, Osaka 571-0057 (JP)**

(74) Representative: **SSM Sandmair
Patentanwälte Rechtsanwalt
Partnerschaft mbB
Joseph-Wild-Straße 20
81829 München (DE)**

(54) **MOTOR FRAME AND MOTOR DEVICE**

(57) The motor frame is easily attached to an external member, and the influence of non-uniformity in the circumferential direction is suppressed. Motor frame (3) includes cylindrical body (30) penetrating in a direction in which a shaft center of a rotating shaft of a motor inserted inside the cylindrical body extends. Cylindrical body (30) has four outer wall surfaces (4), inner wall surface (5), and four connecting sections (6). Inner wall surface (5) has a cylindrical inner surface shape surrounding the rotating shaft and extending along the rotating shaft. Four connecting sections (6) each are positioned at a respective one of four boundaries, each of the four boundaries being formed by a different pair of adjacent outer wall surfaces (4) among four outer wall surfaces (4). Each of four connecting sections (6) has a stress relief groove (7) recessed toward the shaft center at the respective one of four boundaries. At least one connecting section (6) has a first part and a second part along the direction in which the shaft center extends. The first part includes the stress relief groove (7). The second part includes a body section (8) not having stress relief groove (7).

FIG. 1

EP 4 535 624 A1

## Description

TECHNICAL FIELD

The present disclosure relates to a motor frame and a motor device. More specifically, the present disclosure relates to a motor frame including a cylindrical body having four planar outer wall surfaces and a cylindrical inner wall surface, and a motor device including the motor frame.

BACKGROUND ART

Patent Literature 1 discloses a permanent magnet motor including a stator core, a tubular frame, a plurality of spacers, and a rotor core.

The stator core includes a magnetic body formed in a cylindrical shape, windings are applied to a plurality of slots, and a plurality of first axial grooves are formed at equal intervals in the circumferential direction on the outer peripheral portion. A circular hole having an inner diameter larger than an outer diameter of the stator core and in which the stator core is installed is formed in the cylindrical frame, and a plurality of second axial grooves are formed at positions facing the first axial grooves of the circular hole. The plurality of spacers are interference-fitted into the plurality of first and second axial grooves to fix the stator core to the frame with a gap therebetween. The rotor core is rotatably supported by the frame and installed in the stator core, has a plurality of permanent magnets on an outer peripheral portion, and includes a magnetic body formed in a columnar shape.

The stator core is not shrink-fitted to a frame having a large variation in wall thickness in the circumferential direction, but is fixed to the frame via a plurality of spacers having the same shape arranged at equal intervals in the circumferential direction with a gap between the inner periphery of the frame and the outer periphery of the stator core.

According to the permanent magnet type motor described in Patent Literature 1, even if the wall thickness of the frame in the circumferential direction varies greatly, the stator core receives equal pressing force from the plurality of spacers having the same shape arranged at equal intervals in the circumferential direction. Therefore, there is no difference in stress generated in the stator core, no distortion is applied to the magnetic circuit of the stator core, and cogging torque is not deteriorated.

Citation List

Patent Literature

PTL 1: Unexamined Japanese Patent Publication No. 2005-269803

SUMMARY OF THE INVENTION

However, since the frame described in PTL 1 has a rectangular outer shape, it is difficult to attach the frame to an external member.

An object of the present disclosure is to provide a motor frame that is easily attached to an external member and is easily suppressed from being affected by non-uniformity of a thickness in a circumferential direction, and a motor device including the motor frame.

A motor frame according to one aspect of the present disclosure includes a cylindrical body penetrating in a direction in which a shaft center of a rotating shaft of a motor inserted inside the motor frame extends. The cylindrical body has four outer wall surfaces, an inner wall surface, and four connecting sections. The four outer wall surfaces are arranged to surround the rotating shaft, and each have a planar shape along the rotating shaft. The inner wall surface has a cylindrical inner surface shape surrounding the rotating shaft and extending along the rotating shaft. Four connecting sections each are positioned at a respective one of four boundaries. Each of the four boundaries is formed by a different pair of adjacent outer wall surfaces among the four outer wall surfaces. Each of the four connecting sections has a stress relief groove recessed toward the shaft center at the respective one of four boundaries. The at least one connecting section a first part and a second part along the direction in which the shaft center extends. The first part includes the stress relief groove. The second part includes a body section not having the stress relief groove.

A motor device according to one aspect of the present disclosure includes the motor frame and the motor fitted inside the cylindrical body of the motor frame.

In the motor frame and the motor device of the present disclosure, it is easy to attach the motor frame and the motor device to an external member, and it is easy to suppress the influence of non-uniformity of the wall thickness of the motor frame in the circumferential direction.

BRIEF DESCRIPTION OF DRAWINGS

Fig. 1 is an exploded perspective view of a motor device according to a first exemplary embodiment of the present disclosure.
Fig. 2 is a front view of the motor device according to the first exemplary embodiment of the present disclosure.
Fig. 3 is a perspective view of a motor frame included in the motor device according to the first exemplary embodiment of the present disclosure.
Fig. 4 is a side view of the motor frame according to the first exemplary embodiment of the present disclosure.
Fig. 5 is a top view of the motor frame according to the first exemplary embodiment of the present disclosure.

Fig. 6 is a relationship diagram of an angle θ-wall thickness t of the motor frame according to the first exemplary embodiment of the present disclosure.

Fig. 7 is a graph illustrating a shape of an inner diameter of a stator core of the motor according to the first exemplary embodiment of the present disclosure.

Fig. 8 is a graph illustrating a shape of an inner diameter of a stator core in a case where a motor frame motor of a comparative example is inserted.

Fig. 9 is a relationship diagram between each order and amplitude in the order when the thickness function of the motor frame according to the first exemplary embodiment of the present disclosure is subjected to Fourier series expansion.

Fig. 10 is an exploded perspective view of a motor device according to a second exemplary embodiment of the present disclosure.

Fig. 11 is a front view of the motor device according to the second exemplary embodiment of the present disclosure.

Fig. 12 is a perspective view of a motor frame included in the motor device according to the second exemplary embodiment of the present disclosure.

DESCRIPTION OF EMBODIMENT

(1) Outline

A motor frame and a motor device according to the present disclosure will be described. The exemplary embodiments described below are merely a part of various exemplary embodiments of the present disclosure, and in the following exemplary embodiments, various modifications can be made depending on the design and the like as long as the object of the present disclosure can be achieved.

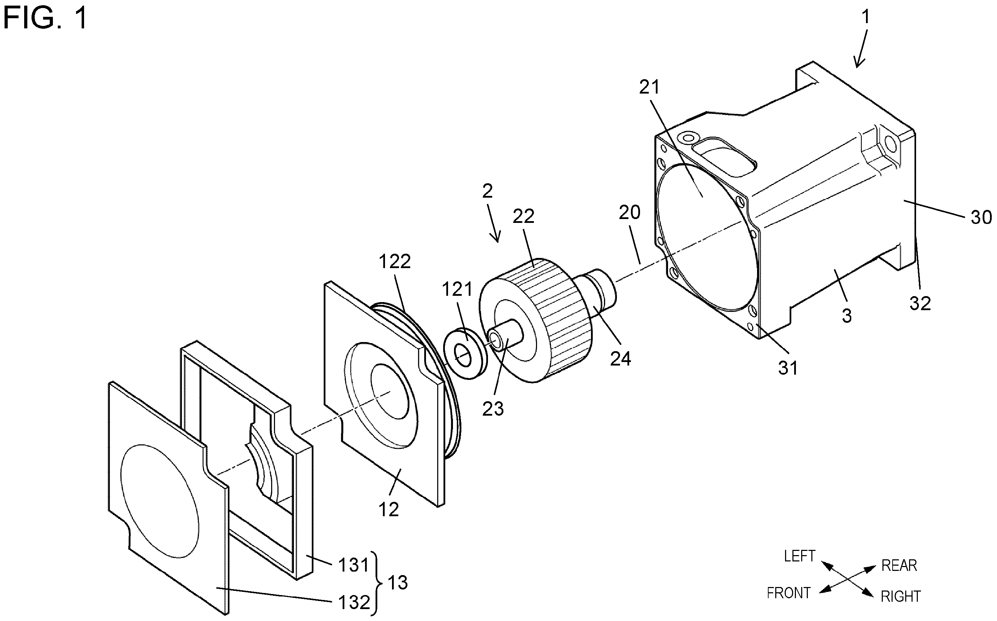

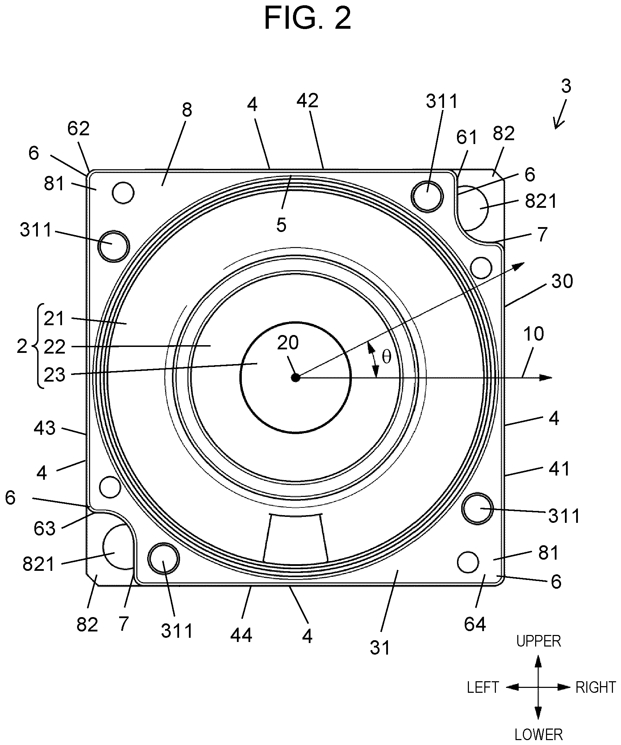

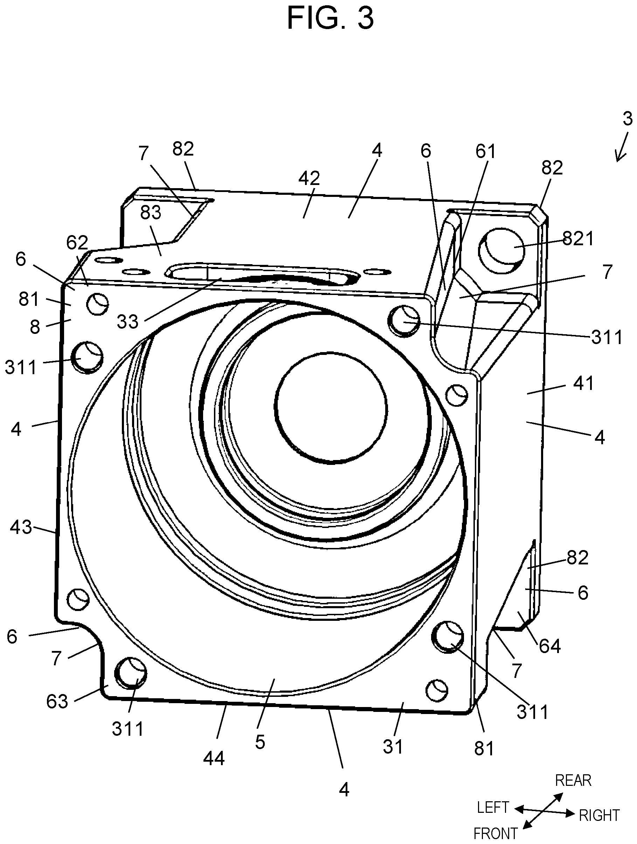

Fig. 1 is an exploded perspective view of motor device 1 according to a first exemplary embodiment of the present disclosure. Fig. 2 is a front view of motor device 1. Fig. 3 is a perspective view of motor frame 3 included in motor device 1. As illustrated in Fig. 1, motor frame 3 according to the present disclosure includes cylindrical body 30 penetrating in a direction in which shaft center 20 of rotating shaft 23 of motor 2 fitted inside the motor frame extends. As illustrated in Figs. 2 and 3, cylindrical body 30 has four outer wall surfaces 4, inner wall surface 5, and four connecting sections 6. Four outer wall surfaces 4 are arranged to surround rotating shaft 23, and each have a planar shape along rotating shaft 23. Inner wall surface 5 has a cylindrical inner surface shape surrounding rotating shaft 23 and extending along rotating shaft 23. Each of the four connecting sections 6 is positioned between adjacent outer wall surfaces 4 of four outer wall surfaces 4. Each of four connecting sections 6 has stress relief groove 7 recessed toward shaft center 20 at the boundary between both adjacent outer wall surfaces 4. At least one connecting section 6 has stress relief groove 7 in a part in the direction in which shaft center 20 extends, and has body section 8 in which stress relief groove 7 is not formed in the other part in the direction in which shaft center 20 extends.

Motor device 1 according to the present disclosure includes motor frame 3 and motor 2 fitted inside cylindrical body 30 of motor frame 3.

In motor frame 3 and motor device 1 according to the present disclosure, it is easy to reduce the cogging torque generated in motor 2 by reducing the non-uniformity of the wall thickness distribution of cylindrical body 30 to make the shape of stator 21 close to a perfect circle by uniformizing the stress distribution applied to stator 21. In addition, since body section 8 is formed, cylindrical body 30 is easily attached to an external member.

(2) First exemplary embodiment

Hereinafter, motor frame 3 and motor device 1 according to a first exemplary embodiment will be described with reference to Figs. 1 to 9.

(2.1) Outline of motor device

Fig. 1 is an exploded perspective view of motor device 1 according to a first exemplary embodiment of the present disclosure. Fig. 2 is a front view of motor device 1 according to the first exemplary embodiment of the present disclosure. As illustrated in Fig. 1, motor device 1 includes motor (electric motor) 2 and motor frame 3 into which motor 2 is fitted. Motor 2 is a so-called servomotor. Motor device 1 further includes position detector 121, bracket 12, detector cover 13, and seal 122. Position detector 121 is a so-called rotary encoder. Position detector 121 converts the displacement amount in the rotation of motor 2 about the shaft center of the rotor into a digital amount.

Bracket 12 is a member for attaching position detector 121 to motor frame 3. Bracket 12 is a plate-shaped member having an opening therein. Position detector 121 is attached to bracket 12 by an appropriate attachment method such as screwing. Bracket 12 to which position detector 121 is attached is attached to motor frame 3 by an appropriate attachment method such as screwing. Seal 122 is interposed between bracket 12 and motor frame 3. That is, bracket 12 is attached to motor frame 3 via seal 122.

Detector cover 13 includes frame portion 131 and lid portion 132. Lid portion 132 is attached to frame portion 131 by an appropriate attachment method such as screwing. Frame portion 131 is attached to motor frame 3 by an appropriate attachment method such as screwing.

(2.2) Motor

Motor 2 includes stator 21, rotor 22, and rotating shaft 23. Stator 21 is fitted inside motor frame 3 by shrink fitting. Stator 21 generates a magnetic force for rotating rotor 22. Stator 21 includes a stator core and a winding coil.

Rotor 22 is disposed in motor frame 3 (stator 21) to be rotatable with respect to stator 21. Motor 2 is an inner rotor type motor in which rotor 22 is disposed inside stator 21. Rotor 22 is surrounded by the stator core and rotates by the magnetic force generated by the stator core. In rotor 22, a plurality of N poles and S poles of magnets are repeatedly arranged along the rotation direction. Rotor 22 is a surface magnet type rotor in which a permanent magnet is attached to a surface of a rotor core.

Rotating shaft 23 is a shaft fixed to the center of rotor 22. Rotor 22 and rotating shaft 23 rotate about shaft center 20 of rotating shaft 23. Rotating shaft 23 is made of metal and extends in both directions along shaft center 20 of rotor 22. Rotating shaft 23 is fixed to rotor 22 by being fitted into an opening formed in a central portion of rotor 22 by shrink fitting.

Rotating shaft 23 is rotatably supported by stator 21 by a first bearing and a second bearing. Motor 2 further includes a first bearing and a second bearing. The first bearing and the second bearing are rolling bearings that rotatably support rotating shaft 23. The first bearing is fitted inside motor frame 3 and attached to motor frame 3. The second bearing is attached to bracket 12 by an appropriate attachment method such as screwing.

(2.3) Motor frame

(2.3.1) Cylindrical body

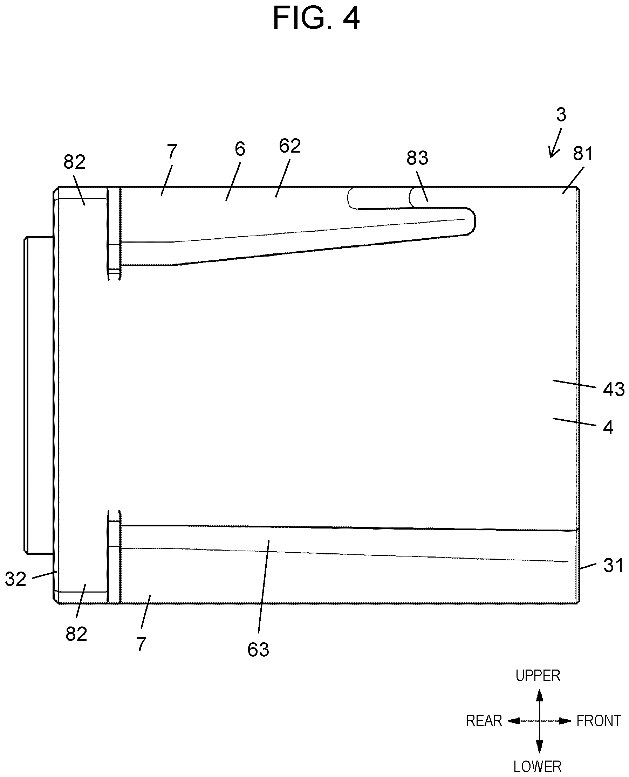

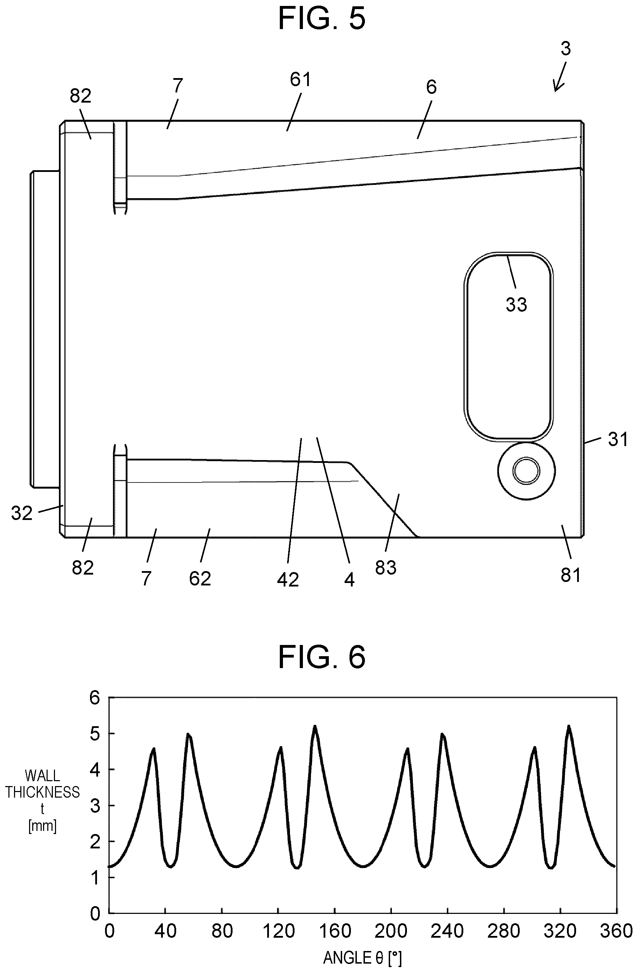

Fig. 3 is a perspective view of motor frame 3 included in the motor device according to the first exemplary embodiment of the present disclosure. Fig. 4 is a side view of motor frame 3 according to the first exemplary embodiment of the present disclosure. Fig. 5 is a top view of motor frame 3 according to the first exemplary embodiment of the present disclosure.

As illustrated in Figs. 1 to 5, motor frame 3 has motor 2 attached thereto and holds this motor 2. Motor frame 3 includes cylindrical body 30. Motor 2 is fitted inside cylindrical body 30. Cylindrical body 30 has a cylindrical shape penetrating in the direction in which shaft center 20 of rotating shaft 23 of motor 2 extends.

(2.3.2) End surface

Cylindrical body 30 has two end surfaces (first end surface 31 and second end surface 32), four outer wall surfaces 4 (first outer wall surface 41, second outer wall surface 42, third outer wall surface 43, and fourth outer wall surface 44), inner wall surface 5, and four connecting sections 6 (first connecting section 61, second connecting section 62, third connecting section 63, and fourth connecting section 64). Here, as illustrated in Fig. 1, the front-rear direction and the left-right direction are defined for convenience. A direction in which shaft center 20 of rotating shaft 23 extends is defined as a front-rear direction, and one side of the direction is defined as a front side and the other side is defined as a rear side. In addition, left and right sides when viewed from the front to the rear are defined as left and right sides, respectively.

As illustrated in Figs. 1 and 2, cylindrical body 30 has front first end surface 31 and rear second end surface 32. An outer peripheral edge of first end surface 31 has a substantially quadrangular shape, more specifically, a rectangular shape, and more specifically, a square shape. An inner peripheral edge of first end surface 31 has a circular shape. A normal line of first end surface 31 faces forward.

An outer peripheral edge of second end surface 32 has a substantially quadrangular shape, more specifically, a rectangular shape, and more specifically, a square shape. An inner peripheral edge of second end surface 32 has a circular shape. A normal line of second end surface 32 faces rearward.

The outer peripheral edge of first end surface 31 and the outer peripheral edge of second end surface 32 have substantially the same size when viewed in the direction in which shaft center 20 extends. Cylindrical body 30 has a square shape when viewed in the direction in which shaft center 20 extends.

The inner peripheral edge of first end surface 31 is larger than the inner peripheral edge of second end surface 32 when viewed in the direction in which shaft center 20 extends. The inner peripheral edge of first end surface 31 is substantially the same size as the outer peripheral edge of stator 21 of motor 2, but the inner peripheral edge of second end surface 32 is smaller than the outer peripheral edge of stator 21 of motor 2. Stator 21 can be inserted inside cylindrical body 30 from first end surface 31, but cannot be inserted from second end surface 32.

(2.3.3) Outer wall surface

As illustrated in Fig. 2, four outer wall surfaces 4 are arranged to surround rotating shaft 23, and each have a planar shape along rotating shaft 23. For convenience, among four outer wall surfaces 4, outer wall surface 4 whose normal line faces rightward is defined as first outer wall surface 41, outer wall surface 4 whose normal line faces upward is defined as second outer wall surface 42, outer wall surface 4 whose normal line faces leftward is defined as third outer wall surface 43, and outer wall surface 4 whose normal line faces downward is defined as fourth outer wall surface 44. Each of first outer wall surface 41 to fourth outer wall surface 44 is formed of a flat surface. First outer wall surface 41 to fourth outer wall surface 44 may partially include a portion that does not form a plane.

First outer wall surface 41 to fourth outer wall surface 44 have a substantially rectangular shape in front view. That is, first outer wall surface 41 has a substantially rectangular shape when viewed from rightward, second outer wall surface 42 has a substantially rectangular shape when viewed from upward, third outer wall surface 43 has a substantially rectangular shape when viewed from leftward, and fourth outer wall surface 44 has a substantially rectangular shape when viewed from downward. Cylindrical body 30 has a rectangular shape when viewed from any of leftward, upward, leftward, and downward directions.

In cylindrical body 30, through-hole 33 penetrating in the inside-outside direction orthogonal to the front-rear direction is formed in one outer wall surface 4 (for example, second outer wall surface 42). Through through-hole 33, a wire can be passed from the outside of cylindrical body 30 to motor 2 fitted inside cylindrical body 30.

(2.3.4) Inner wall surface

As illustrated in Figs. 2 and 3, inner wall surface 5 has a cylindrical inner surface shape surrounding rotating shaft 23 and extending along rotating shaft 23. Fig. 3 illustrates only motor frame 3. Stator 21 of motor 2 is fitted into inner wall surface 5.

(2.3.5) Connecting section

As illustrated in Fig. 2, four connecting sections 6 are positioned between adjacent outer wall surfaces of four outer wall surfaces 4. For convenience, among four connecting sections 6, connecting section 6 between first outer wall surface 41 and second outer wall surface 42 is referred to as first connecting section 61, connecting section 6 between second outer wall surface 42 and third outer wall surface 43 is referred to as second connecting section 62, connecting section 6 between third outer wall surface 43 and fourth outer wall surface 44 is referred to as third connecting section 63, and connecting section 6 between fourth outer wall surface 44 and first outer wall surface 41 is referred to as fourth connecting section 64.

(2.3.6) Stress relief groove

Each of four connecting sections 6 has stress relief groove 7 recessed toward shaft center 20 at the boundary between both adjacent outer wall surfaces 4. More specifically, in each connecting section 6, stress relief groove 7 recessed inward (in a direction toward shaft center 20) from a virtual extension surface of a plane constituting outer wall surfaces 4 adjacent to each other in both directions of connecting section 6 is formed. Stress relief groove 7 is a groove extending in the direction in which shaft center 20 extends, and is opened at least in the normal direction of adjacent outer wall surfaces 4. Further, stress relief groove 7 may be opened in the direction in which shaft center 20 extends.

Each of four connecting sections 6 has stress relief groove 7 over the entire length of the portion where the contact portion is positioned in the front-rear direction. In the first exemplary embodiment, fitted stator 21 is in contact with the entire length in the front-rear direction of the portion of inner wall surface 5 where step portion 51 is formed.

(2.3.7) Body section

As illustrated in Fig. 3, at least one connecting section 6 has body section 8. Body section 8 is a section where stress relief groove 7 is not formed in connecting section 6. One connecting section 6 in which body section 8 is formed has stress relief groove 7 in a part in the direction in which shaft center 20 extends, and body section 8 is formed in the other part in the direction in which shaft center 20 extends. In the first exemplary embodiment, stress relief groove 7 and body section 8 are formed in all of first connecting section 61 to fourth connecting section 64.

As body section 8, first body section 81 is formed at a front end portion of connecting section 6 (cylindrical body 30), and second body section 82 is formed at a rear end portion of connecting section 6. In first connecting section 61 and third connecting section 63, first body section 81 is not formed, and only second body section 82 is formed. Therefore, stress relief grooves 7 formed in first connecting section 61 and third connecting section 63 are not opened rearward but are opened forward. Both first body section 81 and second body section 82 are formed in second connecting section 62 and fourth connecting section 64. Therefore, stress relief grooves 7 formed in second connecting section 62 and fourth connecting section 64 are not opened to either the front side or the rear side.

(3) Thickness of cylindrical body

The wall thickness of cylindrical body 30 will be described. First, the thickness of cylindrical body 30 in the inside-outside direction orthogonal to the front-rear direction is defined as a wall thickness t (mm). In Fig. 2, an angle from reference line 10 about shaft center 20 of an arbitrary point of cylindrical body 30 when viewed from the front-rear direction is defined as an angle $\theta$ (rad). The unit of thickness t and angle $\theta$ is for convenience, the unit of thickness t may not be (mm), and the unit of angle $\theta$ may not be (rad).

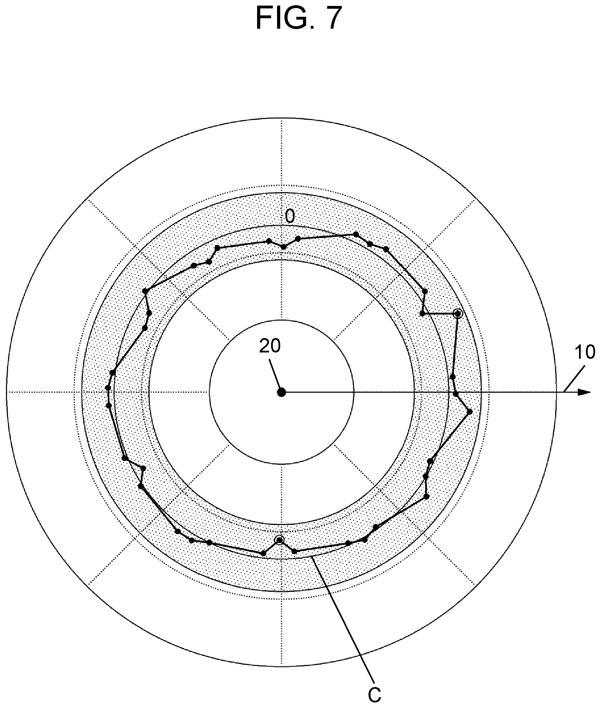

Next, the thickness function is set to $t = f(\theta)$. Fig. 6 illustrates a t-$\theta$ relationship diagram in the first exemplary embodiment. In Fig. 6, thickness t is the thickness of the central portion of the portion in contact with stator 21 fitted inside in the direction in which shaft center 20 extends. Angle $\theta$ is expressed in degrees. In cylindrical body 30, since stress relief groove 7 is formed in all of first connecting section 61 to fourth connecting section 64, a t-θ relationship diagram illustrated in Fig. 6 is obtained. Fig. 7 illustrates a change in the shape of the inner diameter of stator core 21 when motor 2 is fitted into cylindrical body 30. That is, Fig. 7 is a graph illustrating the shape of the inner diameter of stator core 21 of motor 2 according to the first exemplary embodiment of the present disclosure. In the graph illustrated in Fig. 7, angle θ from reference line 10 about shaft center 20 at an arbitrary point of cylindrical body 30 and a change in the inner diameter of stator core 21 before and after motor 2 is fitted at a position of angle θ are illustrated. The range indicated by the dot pattern in Fig. 7 is a range in which the shape formed by the relationship line between the change in the inner diameter of stator core 21 and θ is allowable as a circle. In Fig. 7, circumference C indicating zero at the center of the dot pattern represents the shape of the inner diameter of stator core 21 before motor 2 is fitted into cylindrical body 30. In the graph illustrated in Fig. 7, as the shape formed by the line indicating the inner diameter of stator core 21 after motor 2 is fitted is closer to a perfect circle, the cogging torque generated in motor 2 can be suppressed. In the graph illustrated in Fig. 7, it can be seen that the line indicating the inner diameter of stator core 21 after motor 2 is fitted is close to a circle, and the non-uniformity of the inner diameter of stator core 21 is alleviated.

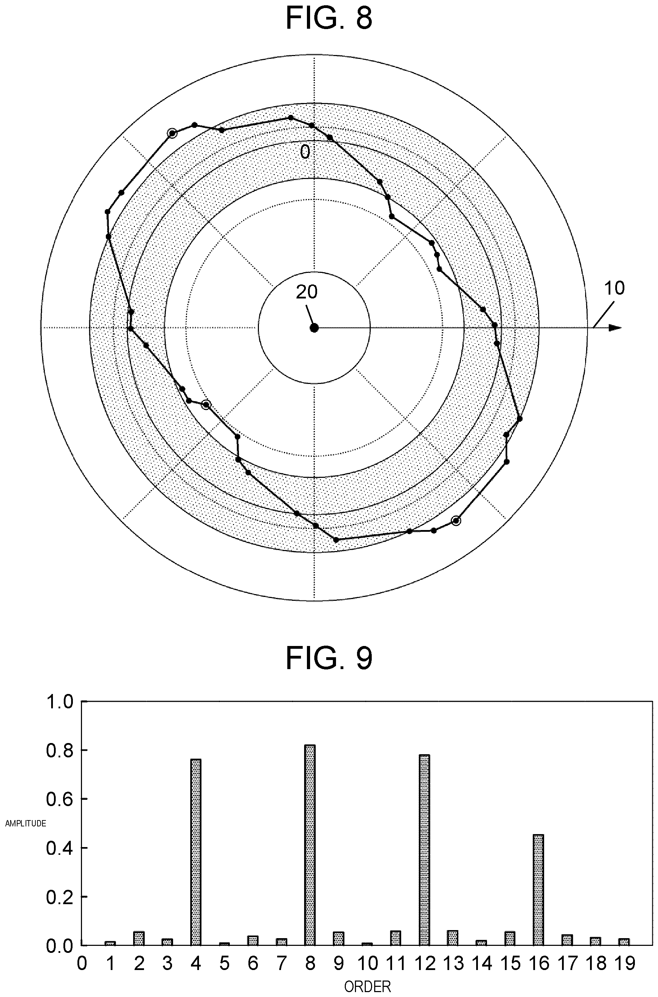

Next, cylindrical body 30 of a comparative example will be described. In cylindrical body 30 of the comparative example, stress relief groove 7 is not formed in second connecting section 62 and fourth connecting section 64, and stress relief groove 7 is formed only in first connecting section 61 and third connecting section 63. Fig. 8 illustrates a change in the inner diameter of stator core 21 when motor 2 is fitted into this cylindrical body 30. That is, Fig. 8 is a graph illustrating angle θ from reference line 10 about shaft center 20 at an arbitrary point of cylindrical body 30 when motor 2 is inserted into the motor frame of the comparative example, and a change in the inner diameter of stator core 21 before and after motor 2 is fitted at this angle θ position. A range indicated by a dot pattern in Fig. 8 is a range in which the inner diameter of stator core 21 can be accepted as a circle. In Fig. 8, circumference C indicating zero at the center of the dot pattern represents the shape of the inner diameter of stator core 21 before motor 2 is fitted. In the graph illustrated in Fig. 8, when θ is 135(°) and 315(°), the change in the positive direction, that is, the direction in which the radius increases is large as viewed from circumference C of stator core 21, and when θ is 45(°) and 225(°), the change in the negative direction, that is, the direction in which the radius decreases is large as viewed from circumference C of stator core 21. In the graph illustrated in Fig. 8, it can be seen that the shape of the inner diameter of stator core 21 is elliptical, and the non-uniformity of the inner diameter of stator core 21 is not alleviated. In cylindrical body 30 of the comparative example, in motor device 1, the non-uniformity of the stress distribution applied to stator 21 increases, and the cogging torque generated in motor 2 increases. On the other hand, in cylindrical body 30 in the first exemplary embodiment, the non-uniformity of the shape of the inner diameter of stator core 21 is alleviated as illustrated in Fig. 7 by including stress relief groove 7. Therefore, the shape of stator 21 can be made close to a perfect circle by uniformizing the stress distribution applied to stator 21, and the cogging torque generated in motor 2 can be easily reduced.

In the first exemplary embodiment, minimum wall thickness t of the portion having stress relief groove 7 and minimum wall thickness t of the portion not having stress relief groove 7 are the same. Minimum wall thickness t of the portion having stress relief groove 7 is wall thickness t at the position where angle θ is (1/4) ×π, (3/4) ×π, (5/4) xπ, and (7/4) ×π (rad). Minimum wall thickness t of the portion not having stress relief groove 7 is wall thickness t at the position where angle θ is (1/2) ×π, π, (3/2) ×π, and 2×π (rad). As a result, the non-uniformity of the inner diameter of stator core 21 is more easily alleviated.

In addition, four connecting sections 6 have stress relief grooves 7 over the entire length of the portion where the contact portion is positioned in the front-rear direction. As a result, the non-uniformity of the inner diameter of stator core 21 is more easily alleviated.

Next, what kind of condition is satisfied by thickness t and angle θ when t-θ relationship in which the cogging torque generated in motor 2 is easily reduced is obtained will be described.

The average value for angle θ of value t of the thickness function is defined as Tave (mm). Next, the thickness function is developed by Fourier series. Fig. 9 is a graph of a result of Fourier series expansion of the thickness function for motor frame 3 in the first exemplary embodiment. That is, Fig. 9 is a relationship diagram between the order and the amplitude in the order when the thickness function of motor frame 3 according to the first exemplary embodiment of the present disclosure is developed by Fourier series. In the graph of Fig. 9, the horizontal axis represents each order, and the vertical axis represents the magnitude (mm) of the amplitude. The description of the phase of the result of the Fourier series expansion will be omitted.

It is preferable that T2 (mm), which is a coefficient of a quadratic term of a result of Fourier series expansion, satisfy T2 ≤ Tave × 0.25. In the graph of Fig. 9, T2 ≤ Tave × 0.25 is satisfied.

As T2 (mm), which is a coefficient of a quadratic term of a result of Fourier series expansion, increases, a change in a positive direction, that is, a direction in which the radius increases as viewed from circumference C of stator core 21 tends to become larger at a pair of diagonal angles θ, and a change in a negative direction, that is, a direction in which the radius decreases as viewed from circumference C of stator core 21 tends to become larger at another pair of angles θ orthogonal to the pair of angles θ. That is, the ratio of the major axis/minor axis of the ellipse formed by the shape of the inner diameter of stator core 21 illustrated in Fig. 8 increases, the non-uniformity of the stress distribution applied to stator 21 increases, and the cogging torque generated in motor 2 tends to increase.

When T2 (mm), which is a coefficient of a quadratic term of a result of Fourier series expansion, satisfies T2 ≤ Tave × 0.25, the stress distribution applied to stator 21 is made uniform, the shape of stator 21 is brought close to a perfect circle, and the cogging torque generated in motor 2 is easily suppressed.

(4) Second exemplary embodiment

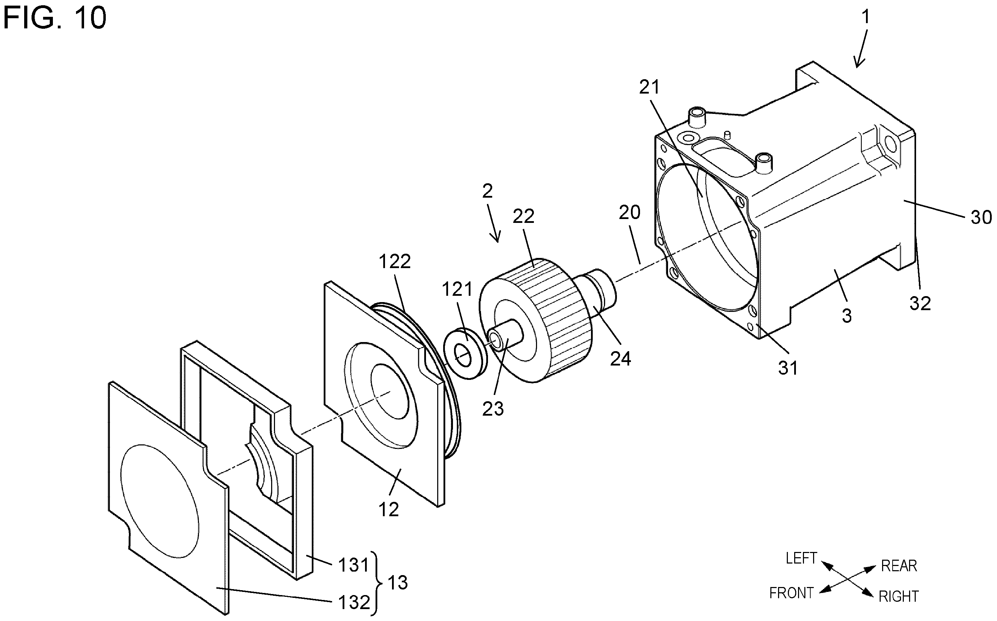

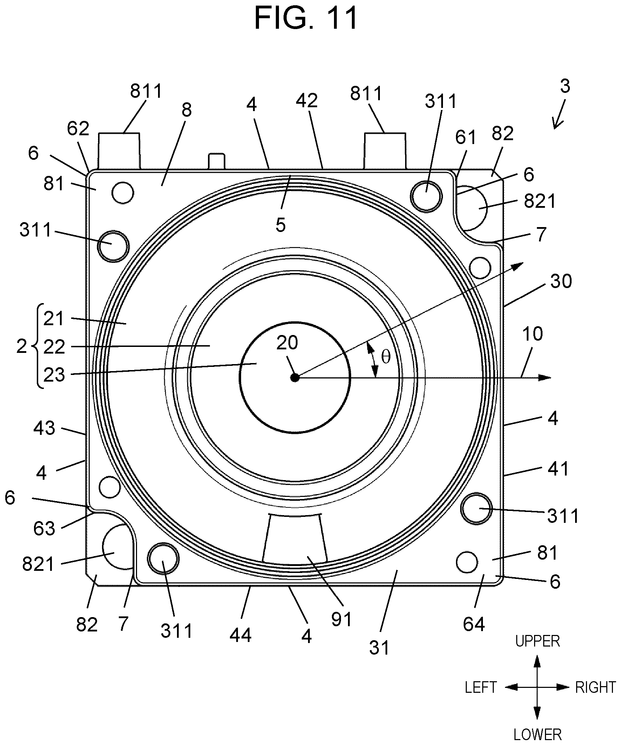

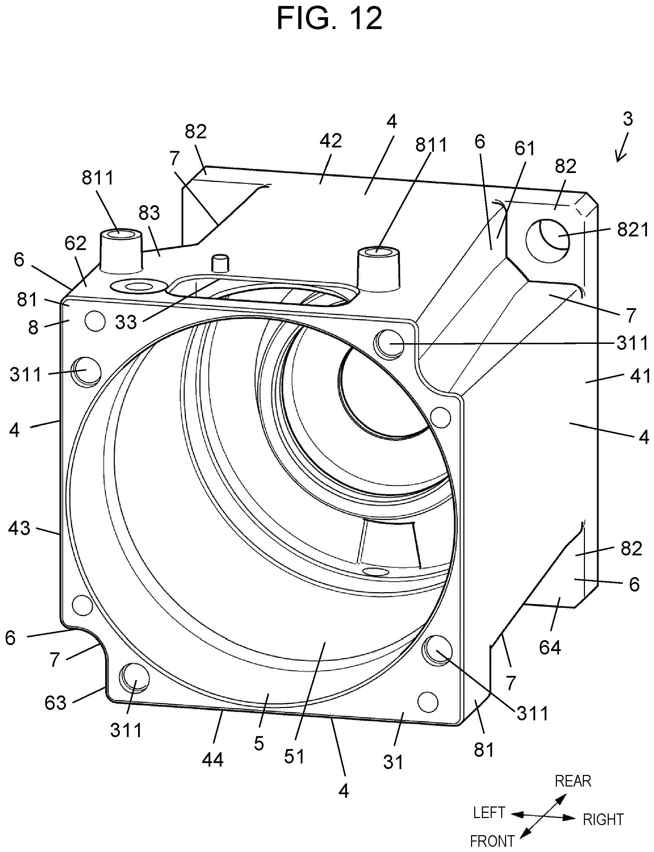

Hereinafter, motor device 1 and motor frame 3 according to a second exemplary embodiment will be described with reference to Figs. 10 to 12. Fig. 10 is an exploded perspective view of motor device 1 according to the second exemplary embodiment of the present disclosure. Fig. 11 is a front view of motor device 1 according to the second exemplary embodiment of the present disclosure. Fig. 10 is a perspective view of motor frame 3 according to the second exemplary embodiment of the present disclosure. The difference between motor frame 3 described in the first exemplary embodiment and motor frame 3 described in the second exemplary embodiment is that motor frame 3 described in the second exemplary embodiment is provided with step portion 51, protruding section 811, and resin injection port 91. Other configurations of motor frame 3 illustrated in Fig. 10 are similar to those of motor frame 3 illustrated in Fig. 3.

Stator 21 of motor 2 is fitted into inner wall surface 5 of motor frame 3. In the second exemplary embodiment, inner wall surface 5 itself serves as a contact portion with motor 2 fitted therein.

First body section 81 constitutes an attachment section to which a specific member is attached. First body section 81 serving as the attachment section has protruding section 83. Fixing hole 811 into which a bolt is screwed is formed in protruding section 83. Protruding section 83 is a body section for providing a space necessary for disposing the member on through-hole 33. When a specific member is attached to first body section 81, the bolt is rotated by a tool such as a screwdriver. Here, the member is, for example, a member for waterproofing or dustproofing of motor device 1, but is not particularly limited. Fixing hole 311 into which a bolt is screwed is formed in first end surface 31, and bracket 12 is attached by the bolt screwed into fixing hole 311.

Second body section 82 of each of first connecting section 61 and third connecting section 63 constitutes an attachment section for attaching motor frame 3 to an external device. Through hole 821 penetrating in the front-rear direction is formed in second body section 82 of each of first connecting section 61 and third connecting section 63, and cylindrical body 30 is attached to an external device by a fixing tool including a bolt and a nut. In attaching cylindrical body 30 to an external device, the fixing tool is rotated by a tool such as a wrench or a screwdriver. At this time, the operator can insert the tool into stress relief groove 7 and can easily fasten the fixing tool.

In the second exemplary embodiment, inner wall surface 5 is formed with step portion 51 having a diameter slightly smaller than those of the front and rear portions in a part of the direction in which the shaft center extends (that is, the front-rear direction). Step portion 51 serves as a contact portion with motor 2 fitted therein.

(5) Modifications

Position detector 121, bracket 12, detector cover 13, and seal 122 have arbitrary configurations, and motor device 1 does not need to include them.

Position detector 121 may be, for example, a slip ring or the like, and is not limited to a rotary encoder.

Motor 2 is not limited to a servo motor.

Rotor 22 is not limited to a surface magnet type rotor.

Through-hole 33 has an arbitrary configuration and does not need to be formed in cylindrical body 30.

Inner wall surface 5 may partially include a portion not constituting the cylindrical inner surface. In inner wall surface 5, the contact portion of motor 2 fitted inside inner wall surface 5 with stator 21 may extend over the entire length in the direction in which the shaft center extends (that is, the front-rear direction). The contact portion of motor 2 fitted inside inner wall surface 5 with stator 21 may or may not be formed by step portion 51. That is, the front and rear portions of the contact portion and the contact portion may be on the same surface extending in the front-rear direction.

The range in which stress relief groove 7 is formed does not need to extend over the entire length in the front-rear direction of the portion where the contact portion is positioned.

The specific member attached to the attachment portion including body section 8 is not limited to detector cover 13.

Protruding section 83 has an arbitrary configuration and does not need to be provided in motor frame 3.

In the above-described exemplary embodiment, T2 ≤ Tave × 0.25 is satisfied for thickness t of the central portion of the portion in contact with stator 21 fitted inside in the direction in which shaft center 20 extends. On the other hand, T2 ≤ Tave × 0.25 may be satisfied at least for thickness t of any portion of the portion in contact with stator 21 fitted inside in the direction in which shaft center 20 extends. In addition, it is more preferable to satisfy T2 ≤ Tave × 0.25 as long as it is for thickness t of all portions over the entire length of the portion in contact with stator 21 fitted inside in the direction in which shaft center 20 extends.

The range satisfying T2 ≤ Tave × 0.25 does not need to be thickness t of all portions in the direction in which shaft center 20 extends.

(6) Conclusions

As described above, motor frame 3 of the first aspect includes cylindrical body 30 penetrating in the direction in which shaft center 20 of rotating shaft 23 of motor 2 fitted inside extends. Cylindrical body 30 has four outer wall surfaces 4, inner wall surface 5, and four connecting sections 6. Four outer wall surfaces 4 are arranged to surround rotating shaft 23, and each have a planar shape along rotating shaft 23. Inner wall surface 5 has a cylindrical inner surface shape surrounding rotating shaft 23 and extending along rotating shaft 23. Four connecting sections 6 each are positioned at a respective one of four boundaries. Each of the four boundaries is formed by a different pair of adjacent outer wall surfaces 4 among four outer wall surfaces 4. Each of four connecting sections 6 has stress relief groove 7 recessed toward shaft center 20 at the respective one of four boundaries. At least one connecting section 6 has a first part and a second part along the direction in which shaft center 20 extends. The first part includes the stress relief groove 7. The second part includes a body section 8 not having stress relief groove 7.

In the first aspect, the non-uniformity of the inner diameter of stator core 21 is alleviated, so that the stress distribution applied to stator 21 is made uniform, the shape of stator 21 is brought close to a perfect circle, and the cogging torque generated in motor 2 is easily reduced. In addition, since body section 8 is formed, cylindrical body 30 is easily attached to an external member.

The second aspect can be implemented by a combination with the first aspect. In the second aspect, at least one connecting section 6 has an attachment section which is formed of body section 8 and to which a specific member is attached at one end portion of the at least one connecting section 6 in the direction in which shaft center 20 extends.

In the second aspect, it is easy to attach a specific member to cylindrical body 30.

The third aspect can be implemented by a combination with the second aspect. In the third aspect, at least one connecting section 6 further includes protruding section 83 extending toward another end portion of the at least one connecting section 6 in the direction in which shaft center 20 extends from the attachment section.

In the third aspect, a space required for disposing the member on through-hole 33 can be provided by protruding section 83.

The fourth aspect can be implemented by a combination with any one of the first to third aspects. In the fourth aspect, cylindrical body 30 includes a first portion and a second portion. The first portion having the stress relief groove 7 in an inside-outside direction orthogonal to the direction in which the shaft center 20 extends. The second portion does not have the stress relief groove 7 in the inside-outside direction. When the thickness of cylindrical body 30 in the inside-outside direction is defined as a wall thickness, the minimum wall thickness of the first portion and the minimum wall thickness of the second portion are the same.

In the fourth aspect, the non-uniformity of the inner diameter of stator core 21 is more easily reduced.

The fifth aspect can be implemented by a combination with any one of the first to fourth aspects. In the fifth aspect, inner wall surface 5 has a contact portion with stator 21 of motor 2 fitted therein in a part or the whole of the inner wall surface 5 in the direction in which shaft center 20 extends. Four connecting sections 6 have stress relief grooves 7 over the entire length of the portion where the contact portion is positioned in the direction in which shaft center 20 extends.

In the fifth aspect, the non-uniformity of the inner diameter of stator 21 is more easily alleviated.

The sixth aspect can be implemented by a combination with any one of the first to fifth aspects. In the sixth aspect, the thickness of cylindrical body 30 in the inside-outside direction orthogonal to the direction in which shaft center 20 extends is defined as wall thickness t (mm) in the entire length or a part of the portion of motor 2 fitted inside cylindrical body 30 in contact with stator 21 in the direction in which shaft center 20 extends. An angle of an arbitrary point of cylindrical body 30 about shaft center 20 from the reference line when viewed from the direction in which shaft center 20 extends is defined as angle $\theta$ (rad). The thickness function is defined as $t = f(\theta)$. When an average value for angle $\theta$ of thickness function t is Tave (mm), T2 (mm), which is a coefficient of a quadratic term when the thickness function is developed by Fourier series, satisfies $T2 \leq Tave \times 0.25$.

In the sixth aspect, the stress applied to stator 21 is made uniform, the shape of stator 21 is brought close to a perfect circle, and the cogging torque generated in motor 2 can be easily reduced.

The seventh aspect can be implemented by a combination with any one of the first to sixth aspects. In the seventh aspect, in cylindrical body 30, through-hole 33 penetrating in the inside-outside direction orthogonal to the direction in which shaft center 20 extends is formed in a portion corresponding to one of the four outer wall surface 4.

In the seventh aspect, a wire can be passed from the outside of cylindrical body 30 to motor 2 fitted inside cylindrical body 30.

The eighth aspect can be implemented by a combination with any one of the first to seventh aspects. In the eighth aspect, motor device 1 includes motor frame 3 according to any one of the first to seventh aspects, and motor 2 fitted inside cylindrical body 30 of motor frame 3.

In the eighth aspect, by alleviating the non-uniformity of the inner diameter of stator core 21, the stress applied to stator 21 is made uniform, the shape of stator 21 is brought close to a perfect circle, and the cogging torque generated in motor 2 is easily reduced. In addition, since body section 8 is formed, cylindrical body 30 is easily attached to an external member.

INDUSTRIAL APPLICABILITY

The motor frame and the motor device of the present disclosure are easily attached to an external member, and it is easy to suppress the influence of non-uniformity in the circumferential direction. Therefore, the performance of the motor frame and the motor device can be improved. As described above, the motor frame and the motor device of the present disclosure are industrially useful.

REFERENCE MARKS IN THE DRAWINGS

| 1 | motor device |
|---|---|
| 10 | reference line |
| 2 | motor |
| 20 | shaft center |
| 23 | rotating shaft |
| 3 | motor frame |
| 30 | cylindrical body |
| 33 | through-hole |
| 4 | outer wall surface |
| 41 | first outer wall surface |
| 42 | second outer wall surface |
| 43 | third outer wall surface |
| 44 | fourth outer wall surface |
| 5 | inner wall surface |
| 6 | connecting section |
| 61 | first connecting section |
| 62 | second connecting section |
| 63 | third connecting section |
| 64 | fourth connecting section |
| 7 | stress relief groove |
| 8 | body section |
| 81 | first body section |
| 82 | second body section |
| 83 | protruding section |
| 121 | position detector |
| 122 | seal |

**Claims**

1.  A motor frame comprising

    a cylindrical body that penetrates in a direction in which a shaft center of a rotating shaft of a motor inserted inside the cylindrical body extends, wherein
    the cylindrical body includes:

       four outer wall surfaces arranged to surround the rotating shaft and each having a planar shape along the rotating shaft;
an inner wall surface surrounding the rotating shaft and having a cylindrical inner surface shape along the rotating shaft; and
four connecting sections each positioned at a respective one of four boundaries, each of the four boundaries being formed by a different pair of adjacent outer wall surfaces among the four outer wall surfaces,

    each of the four connecting sections has a stress relief groove recessed toward the shaft center at the respective one of four boundaries, and
    at least one connecting section has a first part and a second part along the direction in which the shaft center extends, the first part including the stress relief groove, the second part including a body section not having the stress relief groove.

2.  The motor frame according to Claim 1, wherein the at least one connecting section includes an attachment section formed of the body section and to which a specific member is attached at one end portion of the at least one connecting section in the direction in which the shaft center extends.

3.  The motor frame according to Claim 2, wherein the at least one connecting section further includes a protruding section extending from the attachment section toward another end portion of the at least one connecting section in the direction in which the shaft center extends.

4.  The motor frame according to any one of Claims 1 to 3, wherein
    a minimum wall thickness of the first portion and a minimum wall thickness of the second portion are a same when a thickness of the cylindrical body in the inside-outside direction is defined as a wall thickness.

5.  The motor frame according to any one of Claims 1 to 3, wherein

       the inner wall surface has a contact portion with a stator of the motor fitted inside the inner wall surface in a part or a whole of the inner wall surface in the direction in which the shaft center extends, and
       each of the four connecting sections has the stress relief groove over an entire length of a portion where the contact portion is positioned in the direction in which the shaft center extends.

6.  The motor frame according to any one of Claims 1 to 3, wherein

when a thickness of the cylindrical body in an inside-outside direction orthogonal to the direction in which the shaft center extends is defined as wall thickness t (mm) in an entire length or a part of a portion of the motor fitted inside the cylindrical body, the portion being in contact with a stator in the direction in which the shaft center extends,

when an angle of an arbitrary point of the cylindrical body from a reference line about the shaft center as viewed from the direction in which the shaft center extends is defined as angle $\theta$ (rad),

when a thickness function is t = f($\theta$), and

when an average value of the thickness function t for angle $\theta$ is defined as Tave (mm),

T2 (mm), which is a coefficient of a quadratic term when the thickness function is developed by Fourier series, satisfies:

$$T2 \leq Tave \times 0.25.$$

7. The motor frame according to any one of Claims 1 to 3, wherein the cylindrical body has a through-hole penetrating in an inside-outside direction orthogonal to the direction in which the shaft center extends, the through-hole being formed in a portion corresponding to one of the four outer wall surfaces.

8. A motor device comprising:

the motor frame according to any one of Claims 1 to 7; and
the motor fitted inside the cylindrical body of the motor frame.

FIG. 1

# FIG. 2

# FIG. 3

REAR

LEFT ← → RIGHT

FRONT

# FIG. 4

UPPER

REAR ←→ FRONT

LOWER

# FIG. 5

# FIG. 6

# FIG. 7

# FIG. 8

# FIG. 9

# FIG. 10

EP 4 535 624 A1

# FIG. 11

# FIG. 12

## INTERNATIONAL SEARCH REPORT

| International application No. |
|---|
| **PCT/JP2023/019211** |

| **A.** | **CLASSIFICATION OF SUBJECT MATTER** |
|---|---|

*H02K 5/04*(2006.01)i
FI:  H02K5/04

According to International Patent Classification (IPC) or to both national classification and IPC

| **B.** | **FIELDS SEARCHED** |
|---|---|

Minimum documentation searched (classification system followed by classification symbols)

H02K5/04

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

| **C.** | **DOCUMENTS CONSIDERED TO BE RELEVANT** |
|---|---|

| Category* | Citation of document, with indication, where appropriate, of the relevant passages | Relevant to claim No. |
|---|---|---|
| X | JP 2008-228515 A (MITSUBISHI ELECTRIC CORP.) 25 September 2008 (2008-09-25) paragraphs [0001]-[0031], fig. 1-11 | 1-4, 8 |
| Y | | 5, 7 |
| A | | 6 |
| Y | JP 2018-082552 A (NIDEC SANKYO CORP.) 24 May 2018 (2018-05-24) paragraphs [0001]-[0053], fig. 1-5 | 5 |
| A | | 1-4, 6-8 |
| Y | JP 2014-107988 A (MITSUBISHI ELECTRIC CORP.) 09 June 2014 (2014-06-09) paragraphs [0001]-[0039], fig. 1-14 | 7 |
| Y | JP 2017-184317 A (NTN CORP.) 05 October 2017 (2017-10-05) paragraphs [0001]-[0067], fig. 1-12 | 7 |
| A | JP 2005-080416 A (MITSUBISHI ELECTRIC CORP.) 24 March 2005 (2005-03-24) paragraphs [0001]-[0060], fig. 1-20 | 6 |

| ☑ Further documents are listed in the continuation of Box C. | ☑ See patent family annex. |
|---|---|

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **06 July 2023** | **18 July 2023** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

**INTERNATIONAL SEARCH REPORT**

| International application No. |
| --- |
| **PCT/JP2023/019211** |

**C. DOCUMENTS CONSIDERED TO BE RELEVANT**

| Category* | Citation of document, with indication, where appropriate, of the relevant passages | Relevant to claim No. |
| --- | --- | --- |
| A | JP 2005-304150 A (MITSUBISHI ELECTRIC CORP.) 27 October 2005 (2005-10-27) paragraphs [0001]-[0030], fig. 1-34 | 6 |

Form PCT/ISA/210 (second sheet) (January 2015)

**INTERNATIONAL SEARCH REPORT**
Information on patent family members

International application No.

**PCT/JP2023/019211**

| Patent document cited in search report | | | Publication date (day/month/year) | Patent family member(s) | | | Publication date (day/month/year) |
|---|---|---|---|---|---|---|---|
| JP | 2008-228515 | A | 25 September 2008 | (Family: none) | | | |
| JP | 2018-082552 | A | 24 May 2018 | CN | 108075591 | A | |
| JP | 2014-107988 | A | 09 June 2014 | (Family: none) | | | |
| JP | 2017-184317 | A | 05 October 2017 | US paragraphs [0001]-[0078], fig. 1-12 | 2020/0313508 | A1 | |
| | | | | EP | 3439155 | A1 | |
| | | | | CN | 108886303 | A | |
| JP | 2005-080416 | A | 24 March 2005 | US paragraphs [0001]-[0069], fig. 1-20 | 2008/0106164 | A1 | |
| | | | | KR | 10-2006-0064063 | A | |
| | | | | CN | 1833347 | A | |
| JP | 2005-304150 | A | 27 October 2005 | (Family: none) | | | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2005269803 A